# FASCICULE DE BREVET EUROPEEN

(11) **EP 0 668 584 B1**
(45) Date de publication et mention de la délivrance du brevet: **03.07.2002**
(21) Numéro de dépôt: 95400351.3
(22) Date de dépôt: 20.02.1995
(51) Int. Cl.: G11B 7/26

(54) **Procédé de fabrication d'un disque maître ou d' un disque optique**
Herstellung einer Originalplatte oder einer optischen Platte
Method of manufacture of a master disk or optical disk

(30) Priorité: 21.02.1994 FR 9401941
(43) Date de publication de la demande: 23.08.1995
(73) Titulaire: OTB Group B.V., 5652 AM Eindhoven (NL)
(72) Inventeur: Ledieu, Jean, F-78121 Crespieres (FR)
(74) Mandataire: Prins, Adrianus Willem

(56) Documents cités:
- EP-A- 0 176 684
- EP-A- 0 387 037
- EP-A- 0 408 283
- EP-A- 0 449 261
- EP-A- 0 503 961
- EP-A- 0 553 013
- PATENT ABSTRACTS OF JAPAN vol. 011, no. 279 (P-614) 10 Septembre 1987 & JP 62 075 951 A (SHARP CORP) 07 Avril 1987
- PATENT ABSTRACTS OF JAPAN vol. 013, no. 557 (P-974) 12 Décembre 1989 & JP 01 232 552 A (TOSHIBA CORP) 18 Septembre 1989
- PATENT ABSTRACTS OF JAPAN vol. 012, no. 387 (C-536) 14 Octobre 1988 & JP 63 134 078 A (CANON INC) 06 Juin 1988
- PATENT ABSTRACTS OF JAPAN vol. 014, no. 419 (P-1103) 10 Septembre 1990 & JP 02 161 637 A (CANON INC) 21 Juin 1990
- PATENT ABSTRACTS OF JAPAN vol. 016, no. 082 (M-1215) 27 Février 1992 & JP 03 266 629 A (CANON INC) 27 Novembre 1991

## Description

La présente invention concerne un procédé de fabrication d'un disque maître et/ou d'un disque optique.

Les disques optiques de type WORM sont constitués d'un substrat préformaté, généralement en polycarbonate, recouvert d'une ou de plusieurs couches sensibles qui se modifient au contact d'un faisceau émis par une diode laser en réalisant par ablation des microcuvettes représentatives de l'information à enregistrer.

On connaît un procédé de préformatage d'un substrat consistant à effectuer par pressage d'une matrice en nickel une prégravure de ce substrat, prégravure d'un sillon qui permet d'assurer le guidage précis du faisceau issu de la diode laser, en contrôlant son positionnement radial de façon à suivre de manière précise la piste formée par le sillon. Cette prégravure (ou préformatage) peut intégrer une base de temps, apte à permettre l'asservissement de la vitesse de rotation du substrat, cette base de temps étant constituée soit par une wobbulation dans le sillon continu, soit à partir de formats déjà spécifiés notamment dans des normes internationales (format échantillonné ou composite continu).

Par ailleurs, on connaît un procédé consistant à utiliser un enregistreur WORM du commerce pour enregistrer et graver des informations sur des disques optiques en verre, ou pour fabriquer des disques maîtres sur lesquels sont gravées des informations, ces disques maîtres permettant la fabrication de matrices utilisables pour le pressage des disques optiques. On utilise également, dans ce procédé, des substrats préformatés, ces substrats préformatés étant obtenus de la même manière que précédemment.

Mais, par ces procédés, les disques maîtres, les matrices de pressage et donc les disques optiques obtenus comportent non seulement les informations à dupliquer et/ou à lire mais également le signal de préformatage, ce qui perturbe la lecture des informations.

L'invention a pour but de pallier à cet inconvénient en proposant un substrat préformaté utilisable pour la fabrication de disques optiques et pour la fabrication de disques maîtres permettant la fabrication de matrices utilisables pour le pressage de disques optiques.

A cet effet, l'invention propose un procédé pour fabriquer un disque maître ou un disque optique comprenant les étapes de :
- dépôt sur un support d'une couche de résine sensible, ladite couche étant sensible à au moins une contrainte;
- transfert d'un signal de préformatage dans la couche de résine sensible, par application d'une première contrainte, ledit signal de préformatage consistant en une succession de premières microcuvettes ou premier sillon, et la profondeur de ces premières microcuvettes ou premier sillon étant plus faible que l'épaisseur de la couche de résine sensible;
- enregistrement d'un signal d'information à dupliquer dans la couche de résine sensible, par application d'une seconde contrainte, ledit signal d'information consistant en une succession de deuxièmes microcuvettes, la profondeur de ces deuxièmes microcuvettes étant égale à l'épaisseur de la couche de résine sensible;
- transfert par application d'une troisième contrainte dans le support, du signal d'information constitué par la succession de deuxièmes microcuvettes, amenant la formation dans le support de troisièmes microcuvettes;
- obtention dudit disque maître ou disque optique par élimination de la couche de résine restante, où le disque maître ou le disque optique ainsi obtenu ne comprend que lesdites troisièmes microcuvettes.

Selon une caractéristique du procédé de fabrication d'un disque maître ou d'un disque optique selon l'invention, après l'étape d'élimination de la résine résiduelle, on dépose une couche d'un matériau dur, réfléchissant dans le proche infrarouge et conducteur sur la succession de microcuvettes formées dans le support.

Selon une première variante des procédés de fabrication d'un substrat préformaté comportant des informations et des procédés de fabrication d'un disque maître ou d'un disque optique de l'invention, l'enregistrement des informations est effectué dans les zones de résine situées sous la première succession de microcuvettes ou premier sillon.

Selon une autre variante des procédés de fabrication d'un substrat préformaté comportant des informations à dupliquer et des procédés de fabrication d'un disque maître ou d'un disque optique selon l'invention, l'enregistrement des informations est effectué dans des zones de résine différentes de celles situées sous la première succession de microcuvettes ou premier sillon.

Selon une caractéristique des procédés de fabrication d'un substrat préformaté, d'un substrat préformaté comportant des informations et d'un disque maître ou d'un disque optique selon l'invention, l'épaisseur de la couche de résine sensible à au moins une contrainte est comprise entre environ 100 nm et environ 1 µm, et la profondeur de la première succession de microcuvettes ou premier sillon est d'environ 75 nm.

Selon un mode de réalisation des procédés de fabrication d'un substrat préformaté, d'un substrat préformaté comportant des informations et d'un disque maître ou d'un disque optique selon l'invention, le support est en verre.

Selon un autre mode de réalisation des procédés de fabrication d'un substrat préformaté, d'un substrat préformaté comportant des informations et d'un disque maître ou d'un disque optique de l'invention, le support est en aluminium.

Selon encore un autre mode de réalisation des procédés de fabrication d'un substrat préformaté, d'un substrat préformaté comportant des informations et d'un disque maître ou d'un disque optique de l'invention, le support est en un matériau dur, réfléchissant dans le proche infrarouge et conducteur.

Lorsque le support n'est pas en un matériau dur, réfléchissant dans le proche infrarouge et conducteur, on pourra intégrer dans les procédés de fabrication de l'invention une étape de dépôt d'une couche d'un matériau dur, réfléchissant dans le proche infrarouge et conducteur sur le support, avant d'effectuer l'étape de dépôt de la couche de résine sensible.

Dans ce cas, dans le procédé de fabrication d'un disque maître ou d'un disque optique selon l'invention, le transfert des informations se fera alors dans cette couche de matériau dur, réfléchissant dans le proche infrarouge et conducteur.

Selon une caractéristique des procédés de fabrication d'un substrat préformaté, d'un substrat préformaté comportant des informations d'un disque maître ou d'un disque optique de l'invention, le matériau dur, réfléchissant dans le proche infrarouge et conducteur est choisi parmi un nitrure ou un carbonitrure de zirconium, d'hafnium ou de titane.

D'autres caractéristiques, détails et avantages de l'invention apparaîtront plus clairement au cours de la description détaillée qui suit et qui se réfère aux figures annexées dans lesquelles.

La figure 1 illustre schématiquement un premier mode de mise en oeuvre du procédé de fabrication d'un disque maître et/ou d'un disque optique de l'invention.

La figure 2 illustre schématiquement un second mode de mise en oeuvre du procédé de fabrication d'un disque maître et/ou d'un disque optique de l'invention.

La figure 3 illustre schématiquement un troisième mode de mise en oeuvre du procédé de fabrication d'un disque maître et/ou d'un disque optique de l'invention.

Les substrats préformatés de l'invention sont constitués d'un support à surfaces lisses c'est-à-dire ne comportant pas de rugosité supérieure à 50Å, dont une des faces est recouverte d'une couche de résine sensible à au moins une contrainte, cette couche de résine comportant une première succession de microcuvettes ou premier sillon dont la profondeur est inférieure à l'épaisseur de la couche de résine sensible. Plus particulièrement, le support sera constitué d'un verre trempé et/ou désalcalinisé. I1 pourra également être constitué d'aluminium. Il pourra encore être constitué d'un matériau dur, réfléchissant dans le proche infrarouge et conducteur. Dans les cas où le support n'est pas constitué du matériau dur, réfléchissant dans le proche infrarouge et conducteur, le substrat préformaté de l'invention pourra, de plus, comprendre entre la couche de résine sensible et le support une couche d'un tel matériau.

Ce matériau sera plus particulièrement choisi parmi un nitrure ou un carbonitrure de zirconium, d'hafnium ou de titane.

Pour former la première succession de microcuvettes ou premier sillon représentatif du signal de préformatage, et on notera que la phrase "première succession de microcuvettes ou premier sillon" telle qu'utilisée ici signifie que le signal de préformatage peut être aussi bien sous forme d'une succession de microcuvettes que d'un sillon continu, différents moyens peuvent être employés.

Un premier moyen consiste à appliquer une matrice de pressage sur la couche de résine sensible, cette matrice de pressage comportant des microreliefs représentatifs en négatif du signal de préformatage. Par pressage de cette matrice dans la couche de résine sensible, on obtiendra directement la première succession de microcuvettes ou premier sillon souhaité.

On peut également créer la première succession de microcuvettes ou premier sillon par insolation au travers d'un masque comportant le signal de préformatage, de la couche de résine sensible. Les zones de résine insolées sont ensuite éliminées par tout moyen approprié comme par exemple une attaque chimique, et ce sur une profondeur inférieure à l'épaisseur de la couche de résine sensible.

La première succession de microcuvettes ou premier sillon peut encore être créé par irradiation de certaines zones de la couche de résine sensible, par défilement d'un faisceau lumineux, par exemple émis par une source laser, modulé en fonction du signal de préformatage. Là encore, les zones de résine insolées seront ensuite éliminées, par attaque chimique, sur une profondeur inférieure à l'épaisseur de la couche de résine sensible.

L'épaisseur de la couche de résine sensible, quel que soit le moyen utilisé pour créer la première succession de microcuvettes ou premier sillon, est comprise entre environ 100 nm et environ 1 µm et la profondeur des microcuvettes de la première succession de microcuvettes ou du premier sillon est d'environ 75 nm.

Les substrats préformatés de l'invention sont ensuite utilisables pour l'enregistrement d'informations dans tous les types d'enregistreurs nécessitant un substrat préformaté. Plus particulièrement on pourra utiliser un enregistreur de type WORM pour enregistrer les informations.

Les informations pourront être enregistrées dans les zones de résine restantes situées sous la première succession de microcuvettes ou dans des zones différentes de celles-ci.

Dans le cas où l'on enregistre les informations à dupliquer dans les zones de résine situées sous la première succession de microcuvettes par une irradiation et où l'enregistrement du signal de préformatage aura été effectué par irradiation, cette irradiation sera faite par exemple avec un rayonnement à faible énergie de façon à ne pas désensibiliser la résine située sous cette première succession de microcuvettes ou premier sillon.

Les informations peuvent être enregistrées, comme dans le cas du signal de préformatage, par pressage d'une matrice comportant des microreliefs représentatifs en négatif des informations à enregistrer et à dupliquer, ou par une irradiation au travers d'un masque comportant les informations à enregistrer et à dupliquer suivie d'une étape d'élimination par attaque chimique des zones de résine ainsi irradiées ou encore par le défilement d'un faisceau lumineux modulé en fonction du signal à enregistrer et à dupliquer suivi également d'une étape d'élimination des zones de résine insolées. On a ainsi créé une seconde succession de microcuvettes représentatives des informations à dupliquer.

La profondeur des microcuvettes constituant cette seconde succession de microcuvettes devra être égale à l'épaisseur de la couche de résine sensible dans lesquelles elles sont créées. Ainsi, le substrat préformaté comportant des informations à dupliquer de l'invention sera constitué d'un support recouvert d'une couche de résine photosensible comportant une première succession de microcuvettes ou premier sillon dont la profondeur est inférieure à l'épaisseur de la couche de résine sensible et une seconde succession de microcuvettes dont la profondeur est égale à l'épaisseur de la couche sensible dans les zones où elles sont créées. En d'autres termes, la profondeur des microcuvettes de la seconde succession de microcuvettes, représentatives des informations à dupliquer, ira jusqu'à la surface du support.

Bien entendu, le support peut être constitué de tous les matériaux cités ci-dessus pour le matériau préformaté décrit précédemment. Et, lorsque le support n'est pas constitué du matériau dur, réfléchissant dans le proche infrarouge mais recouvert d'une couche de ce matériau, la profondeur des microcuvettes de la seconde succession de microcuvettes ira jusqu'à la surface de ce matériau.

Les substrats préformatés et les substrats préformatés comportant des informations de l'invention sont ensuite utilisés pour la réalisation de disques optiques ou de disques maîtres permettant la fabrication de matrices de pressage pour la fabrication de disques optiques, qui ne comporteront que les informations et non le signal de préformatage.

En effet, après réalisation du substrat préformaté comportant les informations, seules les informations sont transférées dans le support, par gravure chimique ou par plasma réactif, et toute la résine résiduelle est éliminée par attaque chimique ou par tout autre moyen approprié.

Lorsque le support n'est pas constitué du matériau dur, réfléchissant dans le proche infrarouge et conducteur ou n'est pas recouvert du matériau dur, réfléchissant et conducteur, on peut, après l'étape d'élimination de la résine résiduelle, recouvrir le disque maître obtenu d'une couche d'un tel matériau dur, réfléchissant dans le proche infrarouge et conducteur.

Pour mieux faire comprendre l'objet de l'invention, on va en décrire maintenant à titre d'exemples purement illustratifs et non limitatifs plusieurs modes de réalisation.

### EXEMPLE 1

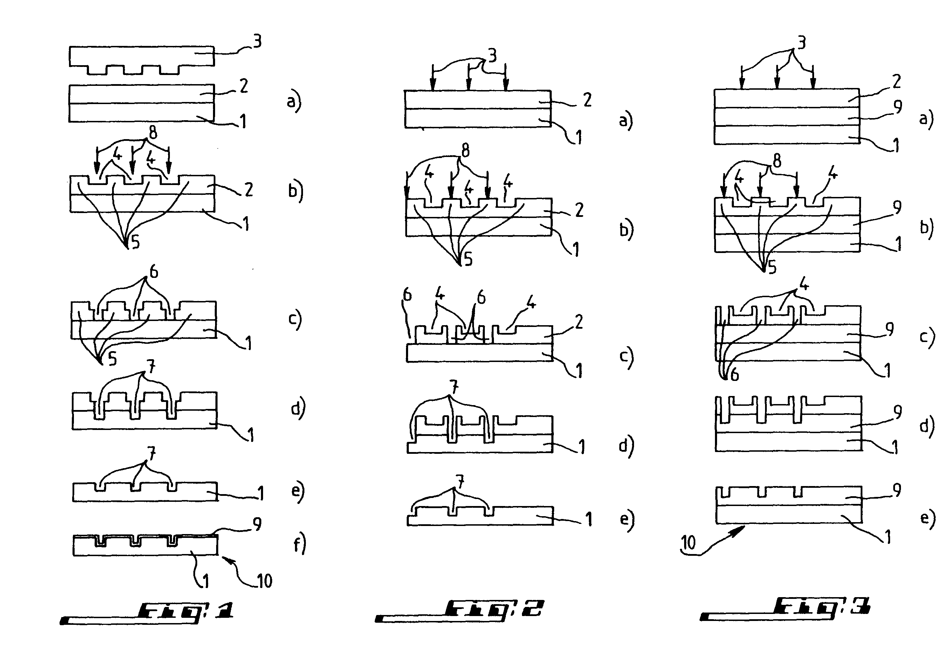

En se référant à la figure 1, on va décrire un premier mode de réalisation des substrats préformatés, des substrats préformatés comportant des informations et des disques maîtres ou disques optiques de l'invention ainsi qu'un premier mode de mise en oeuvre des procédés de fabrication des substrats préformatés, des substrats préformatés comportant des informations et des disques maîtres de l'invention.

A la première étape notée (a) dans la figure 1, on dépose sur un support 1 en verre trempé et/ou désalcalinisé une couche 2 de résine photosensible d'une épaisseur de 200 nm. Par application d'une matrice de pressage 3, on enregistre dans cette couche 2 de résine photosensible le signal de préformatage. On presse la matrice de pressage 3 jusqu'à une profondeur de 75 nm dans la couche 2 de résine photosensible.

Comme illustré à l'étape (b) de la figure 1, on obtient ainsi un substrat préformaté constitué du support 1 en verre trempé et/ou désalcalinisé recouvert de la couche 2 de résine photosensible comportant à sa surface une première succession de microcuvettes ou premier sillon 4 et des zones de résine 5. On enregistre alors par défilement d'un faisceau laser 8 modulé en fonction du signal à enregistrer, les informations à dupliquer, dans les zones situées sous les microcuvettes ou sillon 4.

On élimine ensuite les zones de résine insolées, jusqu'à la surface du support 1.

On obtient alors le substrat préformaté comportant des informations illustré à l'étape (c). Ce substrat préformaté comportant les informations est constitué du support 1 recouvert sur la couche de résine photosensible comportant à sa surface une première succession de microcuvettes ou premier sillon représentatif du signal de préformatage d'une profondeur de 75 nm et sous cette première succession de microcuvettes ou sillon 4, une seconde succession de microcuvettes 6 dont la profondeur est de 200 nm, et des zones 5 de résine résiduelle.

A l'étape (d) on transfère dans le support 1 par gravure par plasma réactif, seulement les informations à dupliquer c'est-à-dire qu'on obtient à ce stade le support 1 dans lequel est transférée seulement la seconde succession de microcuvettes notées 7 ici. Puis on élimine par tout moyen approprié toute la résine résiduelle.

Le disque maître ou le disque optique ainsi obtenu est illustré à l'étape (e). Il est constitué du support 1 comportant à sa surface une succession de microcuvettes 7 représentatives des informations à dupliquer seulement.

A partir du disque maître obtenu, on pourra après une étape de dépôt d'un matériau métallique conducteur, réaliser par une étape de galvanoplastie, une matrice de pressage utilisable pour la fabrication de disques optiques.

Le disque maître ou le disque optique illustré à l'étape (e) peut être revêtu d'une couche d'un matériau 9 dur, réfléchissant dans le proche infrarouge et conducteur. Et l'on obtiendra un disque maître ou un disque optique 10, illustré à l'étape (f) de la figure 1, constitué du support 1 comportant une succession de microcuvettes 7 représentatives des informations à dupliquer ou à lire recouvert d'une couche de matériau 9.

Le matériau 9 devra être dur et ne pas se rayer facilement de façon à pouvoir être manipulé aisément et avoir une grande longévité sur le plan mécanique pour pouvoir permettre la fabrication de nombreuses matrices sans que ces fabrications répétées ne modifient la forme des microcuvettes ni leur profondeur. Il devra avoir une très bonne adhérence sur le support 1, en particulier sur le verre et sur l'aluminium de façon à éliminer tout risque d'arrachage lors de l'étape ultérieure de galvanoplastie qui conduira à l'obtention de la matrice de pressage. Il devra être conducteur pour permettre l'étape de galvanoplastie de fabrication d'une matrice de pressage de disques optiques sans traitement préalable du disque maître 10. Il devra également être stable chimiquement de façon à résister dans les bains chimiques et avoir une grande longévité dans les environnements difficiles et enfin il devra réfléchir dans le domaine des longueurs utilisées dans les lecteurs de disques optiques. Actuellement les longues d'onde utilisées dans les lecteurs de disques optiques sont dans le domaine du proche infrarouge, plus précisément d'environ 780 nm. Cependant, il n'est pas exclu de l'invention que le matériau 9 soit réfléchissant dans le domaine des longueurs d'onde du visible et/ou de l'ultraviolet dans la mesure où une évolution dans la technologie des lecteurs de disques optiques permettrait à ceux-ci d'utiliser de telles longueurs d'onde.

A cet égard, un nitrure ou carbonitrure de zirconium, d'hafnium ou de titane est un matériau particulièrement adapté. Ces matériaux sont en effet durs, réfléchissants dans le proche infrarouge, l'ultraviolet et le visible, et conducteurs.

On préfère tout particulièrement le nitrure de titane.

Ainsi, le disque maître 10 obtenu pourra être lu dans un lecteur de disques optiques. En raison de sa très grande longévité, ce disque maître pourra également être utilisé pour l'archivage d'informations. Les informations qu'il contient ne seront pas détériorées ou modifiées par la fabrication de nouvelles matrices de pressage.

Bien entendu, dans ce mode de réalisation, le support 1 pourra également être constitué d'aluminium ou de tout autre matériau approprié pour la fabrication de disques optiques ou de disques maîtres.

### EXEMPLE 2

En se référant à la figure 2, la première étape notée (a) de ce mode de réalisation de l'invention consiste à déposer sur un support 1 en nitrure de titane une couche 2 de résine photosensible d'une épaisseur de 1µm.

On enregistre sous forme d'image latente, dans cette couche 2 de résine photosensible, le signal de préformatage, par irradiation par un faisceau lumineux 3 au travers d'un masque comportant le signal de préformatage.

On élimine ensuite les zones de résine insolées, jusqu'à une profondeur de 75 nm.

On obtient alors le substrat préformaté selon l'invention illustré à l'étape (b) de la figure 2 constitué du support 1 en nitrure de titane recouvert d'une couche 2 de résine photosensible comportant à sa surface une première succession de microcuvettes ou premier sillon 4 dont la profondeur est inférieure à l'épaisseur de la couche 2 de résine photosensible et qui est représentatif du signal de préformatage.

A l'étape (c) de la figure 2, on enregistre, sous forme d'image latente, les informations à dupliquer à l'aide d'un rayonnement lumineux 8, en utilisant un enregistreur de type WORM, dans les zones 5 non encore insolées de la couche 2 de résine photosensible.

On élimine ensuite, par tout moyen approprié, les zones de résine comportant les informations sous forme d'image latente, et ce jusqu'à la surface du support 1.

On obtient alors le substrat préformaté comportant les informations illustré à l'étape (c) de la figure 2 constitué du support 1 en nitrure de titane recouvert d'une couche 2 de résine photosensible, cette couche 2 de résine photosensible comportant une première succession de microcuvettes ou premier sillon 4 représentatif du signal de préformatage, microcuvettes ou sillon dont l'épaisseur est inférieure à l'épaisseur de la couche 2 de résine photosensible et une seconde succession de microcuvettes 6 s'étendant jusqu'à la surface du support 1 et représentatives des informations à dupliquer.

A l'étape notée (d) de la figure 2, on transfère ensuite les informations à dupliquer dans le support 1 par gravure par plasma réactif et l'on obtient alors dans le support 1 une succession de microcuvettes 7 représentatives de l'information à dupliquer.

L'étape (e) illustrée à la figure 2 est une étape d'élimination de toute la résine résiduelle.

On obtient ainsi en final un disque optique ou un disque maître 10 constitué du support 1 en nitrure de titane dont la surface comporte une succession de microcuvettes 7 représentatives des informations à dupliquer.

Le disque maître ou le disque optique 10 obtenu ici étant constitué du matériau 9 précédemment décrit, aura les mêmes avantages que ceux décrits à l'exemple 1.

Dans ce mode de réalisation particulier, le support 1 pourra également être constitué d'une céramique dure, réfléchissant dans le proche infrarouge et conductrice seulement en surface ou d'un verre dur, réfléchissant dans le proche infrarouge et conducteur seulement en surface, tout en conservant les avantages du disque maître dont le support est soit constitué du matériau 9 soit recouvert du matériau 9.

Bien entendu, dans ce mode de réalisation, on pourra également utiliser du verre trempé et/ou désalcalinisé ou de l'aluminium en tant que matériau pour le support 1. Dans ce cas, on pourra également, comme à l'exemple 1 recouvrir d'une couche de matériau 9 ensuite le support 1 gravé.

### EXEMPLE 3

En se référant à la figure 3, la première étape notée (a) de ce mode de réalisation consiste à déposer sur un support 1 en aluminium une couche de matériau 9, dur, réfléchissant dans le proche infrarouge et conducteur tel que défini précédemment, puis à déposer sur cette couche de matériau 9 une couche 2 de résine photosensible d'une épaisseur de 500 nm.

Par pressage d'une matrice comportant le signal de préformatage, on créé dans la couche 2 de résine photosensible une première succession de microcuvettes ou premier sillon 4 d'une profondeur de 75 nm, représentatif du signal de préformatage.

On obtient ainsi un substrat préformaté selon l'invention illustré à l'étape (b) de la figure 3 constitué du support 1 en aluminium recouvert d'une couche de matériau 9, cette couche de matériau 9 étant elle-même recouverte d'une couche 2 de résine photosensible comportant à sa surface une première succession de microcuvettes ou premier sillon 4 représentatif du signal de préformatage et dont la profondeur est inférieure à l'épaisseur de la couche 2 de résine photosensible et des zones 5 de résine n'ayant subi aucune contrainte.

On enregistre alors les informations à dupliquer dans les zones 5 de résine n'ayant subi aucune contrainte, sous forme d'image latente, par défilement d'un faisceau lumineux 8 modulé en fonction du signal à encoder.

On élimine ensuite les zones de résine irradiées, par tout moyen approprié. Cette élimination permet d'enlever toute la résine irradiée jusqu'à la surface de la couche de matériau 9.

On obtient ainsi le substrat préformaté comportant des informations de l'invention illustré à l'étape (c) de la figure 3 constitué du support 1 en aluminium, recouvert de la couche de matériau 9, elle-même recouverte d'une couche 2 de résine photosensible comportant une première succession de microcuvettes ou premier sillon 4 représentatif du signal de préformatage dont la profondeur est inférieure à l'épaisseur de la couche 2 de résine photosensible et une seconde succession de microcuvettes 6 dont la profondeur est égale à l'épaisseur de la couche de résine photosensible dans les zones où elles sont créées.

L'étape (d) illustrée à la figure 3 est une étape de transfert dans la couche de matériau 9 des informations à dupliquer et d'élimination des zones de résine résiduelle.

On obtient alors le disque maître ou le disque optique 10 illustré à l'étape (e) de la figure 3 constitué du support 1 en aluminium recouvert d'une couche de matériau 9 comportant une succession de microcuvettes représentatives des informations à dupliquer.

Le disque maître ou le disque optique 10 obtenu ainsi permettra la réalisation de nombreuses matrices de pressage de disques optiques, par une simple étape de galvanoplastie, tout en ne nécessitant pas de préparation préalable.

Comme les microcuvettes sont constituées du matériau 9, dur, réfléchissant dans le proche infrarouge et conducteur, ce disque maître et ce disque optique seront lisibles dans des lecteurs de disques optiques, sans préparation spéciale et, le matériau 9 étant très dur, les informations ne seront ni modifiées ni détériorées au cours des fabrications des matrices pressage.

Ils pourront donc servir pour le stockage à longue durée d'informations.

Bien entendu, l'invention est définie dans les revendications mais n'est nullement limitée aux modes de réalisation décrits et illustrés qui n'ont été donnés qu'à titre d'exemple.

## Revendications

1. Procédé pour fabriquer un disque maître ou un disque optique comprenant les étapes de :
- dépôt sur un support (1) d'une couche (2) de résine sensible, ladite couche (2) étant sensible à au moins une contrainte;
- transfert d'un signal de préformatage dans la couche de résine sensible (2), par application d'une première contrainte (3), ledit signal de préformatage consistant en une succession de premières microcuvettes ou premier sillon (4), et la profondeur de ces premières microcuvettes ou premier sillon (4) étant plus faible que l'épaisseur de la couche de résine sensible (2);
- enregistrement d'un signal d'information à dupliquer dans la couche de résine sensible (2), par application d'une seconde contrainte (8), ledit signal d'information consistant en une succession de deuxièmes microcuvettes (6), la profondeur de ces deuxièmes microcuvettes (6) étant égale à l'épaisseur de la couche de résine sensible (2);
- transfert par application d'une troisième contrainte dans le support (1), du signal d'information constitué par la succession de deuxièmes microcuvettes (6), amenant la formation dans le support (1) de troisièmes microcuvettes (7);
- obtention dudit disque maître ou disque optique par élimination de la couche de résine (2) restante, où le disque maître ou le disque optique ainsi obtenu ne comprend que lesdites troisièmes microcuvettes (7).

2. Procédé selon la revendication 1, **caractérisé en ce qu'**il comprend de plus, après l'étape d'élimination de la résine résiduelle, le dépôt d'une couche de matériau (9) dur, réfléchissant dans le proche infrarouge et conducteur.

3. Procédé de fabrication selon l'une quelconque des revendications 1 à 2, **caractérisé en ce que** ladite seconde succession de microcuvettes (6) est créée sous ladite première succession de microcuvettes ou premier sillon (4).

4. Procédé selon l'une quelconque des revendications 1 à 2, **caractérisé en ce que** ladite seconde succession de microcuvettes (6) est créée dans les zones (5) de résine différentes de celles situées sous ladite première succession de microcuvettes ou premier sillon (4).

5. Procédé selon l'une quelconque des revendications 1 à 4, **caractérisé en ce que** l'épaisseur de la couche (2) est comprise entre environ 100 nm et environ 1 µm, et **en ce que** la profondeur des microcuvettes (4) de ladite première succession de microcuvettes (4) est d'environ 75 nm.

6. Procédé selon l'une quelconque des revendications 1 à 5, **caractérisé en ce que** le support (1) est en verre.

7. Procédé selon l'une quelconque des revendications 1 à 5, **caractérisé en ce que** le support (1) est en aluminium.

8. Procédé selon l'une quelconque des revendications 1 et 3 à 5, **caractérisé en ce que** le substrat (1) est en un matériau (9) dur, réfléchissant dans le proche infrarouge et conducteur.

9. Procédé selon la revendication 6 ou 7, **caractérisé en ce que** de plus, on dépose entre le support (1) et la couche (2) une couche de matériau (9), le transfert des informations se faisant alors dans ladite couche d'un matériau (9) dans le cas où l'on procède à un tel transfert.

10. Procédé selon la revendication 8 ou 9, **caractérisé en ce que** le matériau (9) dur, réfléchissant dans le proche infrarouge et conducteur est choisi parmi un nitrure ou un carbonitrure de zirconium, d'hafnium ou de titane.

## Patentansprüche

1. Verfahren zur Herstellung einer Originalplatte oder einer optischen Platte mit den folgenden Schritten:
Ablegen einer Schicht (2) aus empfindlichem Kunstharz auf einer Auflage (1), wobei die Schicht (2) für zumindest eine Belastung empfindlich ist;
Aufbringen eines Vorformatiersignals auf die Schicht aus empfindlichem Kunstharz (2) durch Aufbringen einer ersten Belastung (3), wobei das Vorformatiersignal aus einer Folge von ersten Mikroküvetten oder ersten Furchen (4) besteht, wobei die Tiefe dieser ersten Mikroküvetten oder ersten Furchen (4) geringer ist als die Dicke der Schicht aus empfindlichem Kunstharz (2);
Aufzeichnen eines Signals einer zu duplizierenden Information in der Schicht aus sensiblem Kunstharz (2) durch Aufbringen einer zweiten Belastung (8), wobei das Informationssignal aus einer Folge von zweiten Mikroküvetten (6) besteht, wobei die Tiefe dieser zweiten Mikroküvetten (6) gleich der Dicke der Schicht aus sensiblem Kunstharz (2) ist;
Übertragen, durch Aufbringen einer dritten Belastung auf die Auflage (1), des Informationssignals, welches durch die Folge der zweiten Mikroküvetten (6) gebildet wird, wodurch die Ausbildung von dritten Mikroküvetten (7) in der Auflage (1) erzeugt wird;
Erlangen der Originalplatte oder optischen Platte durch Eliminieren der verbleibenden Kunstharzschicht (2), wobei die Originalplatte oder die optische Platte, die so erhalten wird, nur die dritten Mikroküvetten (7) aufweist.

2. Verfahren nach Anspruch 1, **dadurch gekennzeichnet, dass** es außerdem nach dem Schritt des Eliminierens der verbleibenden Kunstharzschicht das Ablegen einer Schicht aus hartem Material (9) aufweist, welches im nahen Infrarotbereich reflektiert und leitet.

3. Verfahren nach einem der Ansprüche 1 und 2, **dadurch gekennzeichnet, dass** die zweite Folge aus Mikroküvetten (6) unterhalb der ersten Folge aus Mikroküvetten oder ersten Furchen (4) ausgebildet wird.

4. Verfahren nach einem der Ansprüche 1 und 2, **dadurch gekennzeichnet, dass** die zweite Folge aus Mikroküvetten (6) in den Zonen (5) des Kunstharzes ausgeformt wird, die unterschiedlich von denen, die sich unter der ersten Folge aus Mikroküvetten oder ersten Furchen (4) befinden.

5. Verfahren nach einem der Ansprüche 1 bis 4, **dadurch gekennzeichnet, dass** die Dicke der Schicht (2) zwischen ungefähr 100 nm und ungefähr 1 µm beträgt, und dass die Tiefe der Mikroküvetten (4) der ersten Folge aus Mikroküvetten (4) ungefähr 75 nm beträgt.

6. Verfahren nach einem der Ansprüche 1 bis 5, **dadurch gekennzeichnet, dass** die Auflage (1) aus Glas besteht.

7. Verfahren nach einem der Ansprüche 1 bis 5, **dadurch gekennzeichnet, dass** die Auflage (1) aus Aluminium besteht.

8. Verfahren nach einem der Ansprüche 1 und 3 bis 5, **dadurch gekennzeichnet, dass** das Substrat (1) aus einem harten Material (9) besteht, welches im nahen Infrarotbereich reflektiert und leitet.

9. Verfahren nach einem der Ansprüche 6 oder 7, **dadurch gekennzeichnet, dass** man außerdem zwischen der Auflage (1) und der Schicht (2) eine Schicht aus Material (9) aufträgt, wobei die Übertragung der Informationen daher in dieser Materialschicht (9) stattfindet in dem Fall, in welchem man sie für einen solchen Transfer bearbeitet.

10. Verfahren nach einem der Ansprüche 8 oder 9, **dadurch gekennzeichnet, dass** das harte Material (9), welches im nahen Infrarotbereich reflektiert und leitet, ein Nitrid oder Carbonitrid von Zirkonium, Hafnium oder Titan ist.

## Claims

1. Method of producing a master disc or an optical disc comprising the stages of:
- depositing a layer (2) of sensitive resin on a substrate (1), said layer (2) being sensitive to at least one constraint;
- transferring a pre-formatting signal into the layer of sensitive resin (2) by application of a first constraint (3), said pre-formatting signal consisting of a succession of first micropits or first groove (4), and the depth of these first micropits or first groove (4) being smaller than the thickness of the layer of sensitive resin (2);
- recording an information signal to be duplicated in the layer of sensitive resin (2) by application of a second constraint (8), said information signal consisting of a succession of second micropits (6), the depth of these second micropits (6) being equal to the thickness of the layer of sensitive resin (2);
- transfer by application of a third constraint into the substrate (1) of the information signal formed by the succession of second micropits (6), leading to the formation of third micropits (7) in the substrate;
- obtaining of said master disc or optical disc by removal of the remaining layer of resin (2), wherein the master disc or the optical disc thus obtained comprises only said third micropits (7).

2. Method according to claim 1, **characterised in that** it also comprises, after the stage of removal of the residual resin, depositing a layer of hard material (9) which is reflective in the near-infrared range and is conductive.

3. Method of production according to either of claims 1 to 2, **characterised in that** said second succession of micropits (6) is created beneath said first succession of micropits or first groove (4).

4. Method according to either of claims 1 to 2, **characterised in that** said second succession of micropits (6) is created in the zones (5) of resin different from those located beneath said first succession of micropits or first groove (4).

5. Method according to any of claims 1 to 4, **characterised in that** the thickness of the layer (2) is between about 100 nm and about 1 µm and **in that** the depth of the micropits (4) of said first succession of micropits (4) is about 75 nm.

6. Method according to any of claims 1 to 5, **characterised in that** the substrate (1) is made of glass.

7. Method according to any of claims 1 to 5, **characterised in that** the substrate (1) is made of aluminium.

8. Method according to any of claims 1 and 3 to 5, **characterised in that** the substrate (1) is made of a hard material (9) which is reflective in the near-infrared range and is conductive.

9. Method according to claim 6 or 7, **characterised in that** a layer of material (9) is deposited between the substrate (1) and the layer (2), the information thus being transferred into said layer of a material (9) when a transfer of this type is made.

10. Method according to claim 8 or 9, **characterised in that** the hard material (9) which is reflective in the near-infrared range and is conductive is selected from a zirconium, hafnium or titanium nitride or carbonitride.
